Europäisches Patentamt

(19) European Patent Office

Office européen des brevets

(11) Publication number: **0 108 903**
**A2**

## (12) EUROPEAN PATENT APPLICATION

(21) Application number: **83109807.4**

(22) Date of filing: **30.09.83**

(51) Int. Cl.³: **E 21 B 47/12, G 01 V 3/34**

(30) Priority: **12.11.82 US 441017**

(43) Date of publication of application: **23.05.84**
**Bulletin 84/21**

(84) Designated Contracting States: **DE FR GB NL**

(71) Applicant: **DRESSER INDUSTRIES INC., The Dresser Building Elm & Akard Streets P.O. Box 718, Dallas Texas 75221 (US)**

(72) Inventor: **Flagg, Jack James, 3215 Elmridge, Houston Texas 77025 (US)**

(74) Representative: **Wagner, Karl H., WAGNER & GEYER Patentanwälte Gewuerzmuehlstrasse 5 Postfach 246, D-8000 München 22 (DE)**

(54) **Universal interface method and apparatus for subsurface earth formation testing.**

(57) A universal interface and method of interfacing between a subsurface controller and a logging instrument disposed within a well logging sonde. A given interface is selectively addressable by its respective address strapping, accessing the interface exclusively to the data input/output bus between the controller and the interface. Once addressed, the interface delivers commands from the controller to its respective logging tool or receives such commands for internal use. In one embodiment, the interface includes an internal counter for counting pulses from the tool to which it is interconnected and delivering the cumulative count on the data bus. The embodiment further includes optional means for selectively passing digital data such as status words and the like derived from the tool directly through the interface to the controller in response to one of said commands.

Means are also provided for parallel connection of a plurality of such interfaces on the same command clock and data lines to the controller. The command and data lines also carry DC supply voltages for powering the interfaces, and means are provided for carrying both digital and analog data on the same data line.

*1*

## UNIVERSAL INTERFACE METHOD AND APPARATUS FOR SUBSURFACE EARTH FORMATION TESTING

### FIELD OF INVENTION

This invention relates to a universal interface adapted for use in a subsurface geophysical exploration device. More particularly, it relates to a universal interface in a well logging sonde between a downhole data acquisition, control, and telemetry system and logging instruments for generating logging data, and is adapted for use with a plurality of different such logging instruments without modification.

### BACKGROUND OF THE INVENTION

With the advent of computerized well logging systems as well as more sophisticated downhole digital electronics in such geophysical exploration devices, the need has arisen to provide equally sophisticated methods and apparatus for interfacing between such downhole exploration devices and the system controllers.

The conventional approach has been to custom design an interface for each downhole tool as the need arose, tailoring the particular interface to a variety signal level, power, addressing and command requirements, and the like. This solution initially appeared to be relatively satisfactory when the number of possible tools and combinations thereof employed in a given well logging operation, for example, was relatively limited.

However, as this number grew, it became extremely impractical to provide interfaces which had to be custom designed and hardwired for each application. Thus, although the need arose for a universal interface, serious problems were encountered in attempting to accommodate the varying requirements of each tool - particularly in view of the fact that typically the differing tools generate widely varying types of data, whether it be analog, pulse trains wherein the information resides in the pulse count, or conventional digitally encoded data.

For example, conventionally it was necessary to run a separate line from the controller to the interfaces of the respective tools which generated analog data for purposes of retrieving this analog data and avoiding interference with digital data transmissions also occurring on separate lines between the controller and the interfaces. Yet another problem associated with providing separate interfaces for each tool was that typically, due to the aforementioned custom design thereof, conventional approaches provided separate power supplies for each interface. This, in turn, would give rise to undesirable current flows on the supply rails due to mismatched power supplies in each interface.

The disadvantages and problems of the prior art including those hereinabove recited are overcome by the universal interface of the present invention.

SUMMARY OF THE INVENTION

In a preferred embodiment of the present invention, a universal electronic interface is provided on a monolithic substrate or "chip" adapted for use in a well logging sonde. Each interface is interconnected between a subsurface data acquisition, control, and surface-subsurface telemetry system and one or more logging instruments or tools, all of which are contained within the sonde. The interface provides the combined function of address and command decoding, as well as data acquisition by means of a pulse train counter as well as means for passing other digital data directly through the interface bypassing the counter as to be hereinafter described.

In a preferred embodiment, data input/output (I/O), command, and clock lines are connected between the interface and a downhole controller such as a microprocessor, with the data I/O line connected to a serial I/O gating logic, multiplexer and line driver circuit hereinafter referred to collectively as the I/O gating logic. When the command line signal delivered to the I/O gating logic goes high, the data I/O line is thus interconnected through the I/O gating logic to an 8 stage shift register, whereupon an 8 bit address and command word is delivered on the data I/O line through the serial I/O gating logic and shifted into the 8 stage shift register where it is thence available in parallel form for decoding.

Parallel outputs of the 8 bit shift register are delivered to appropriate address and command decode circuits. When the command signal, delivered to the address decoder circuit goes low, the 5 bit pattern or address field word is compared in the decoder to a 5 bit address "strap", also presented to the decoder circuit, which comprises a pattern of address bits, each such pattern being unique to its respective interface.

If the address field and address strap match (signifying that this particular interface and logging tool associated therewith are being addressed by the downhole controller) a decoder output signal is delivered to the I/O gating logic so that this particular interface has exclusive control over the data I/O line, notwithstanding connection of other interfaces (and associated logging tools) on the same data I/O line.

When the interface is thus addressed as aforementioned, the command field in the interface is therefore gated by the address decoding to be available out of the command decoder circuit to cause various ones of eight possible commands associated with the 3 bit command field to be implemented. One series of such commands out of the decoder may be delivered on a command line external to the interface to its associated logging tool to trigger any desired function of the tool with which the particular command is associated. Such functions may be, for example, a resetting or calibration command to a transducer located within the tool, the causing of motoring of a caliper within the tool, delivery of count data on the data I/O line from the tool, and the like.

Regarding the latter, digital data from the tool is presented to the I/O gating logic. It will be recalled that due to the valid decoded address, the I/O gating logic has been given exclusive access to the data I/O line, and thus any digital information thus called up by the appropriate decoded command will be delivered to the interface, through the I/O gating logic, and will be further delivered on the data I/O line to the downhole controller for further processing and delivery to the surface.

A 16 bit ripple counter is provided on the interface which receives pulse train data from a source external to the interface, such as gamma ray pulses from a logging tool interconnected to the interface or tachometer pulses from a motoring circuit which may reside in the tool. One particular decoded command from the command field enables a sequencer circuit, the purpose of which is to coordinate the counting functions of the ripple counter as well as the delivery of the counted result to the I/O gating logic and resulting serial transmission thereof on the data I/O line to the downhole controller.

More specifically, when the aforementioned sequencer circuit receives a command from the command decoder, the sequencer generates an output which isolates the counter input from further pulses incoming to the interface from the logging tool until such time as the cumulative count may be delivered from the counter to the I/O gating logic for transmission on the data I/O line. Another output from the sequencer circuit is delivered to the 8 stage shift register to enable it to receive in parallel the cumulative count from the counter. When this count has been thus stored in the shift register, a next sequencer output to the shift register reconfigures the inputs and outputs of the various shift register stages into conventional form as a true shift register and enables the serial clocking out of the cumulative count stored in the shift register to the I/O gating logic and thus on the data I/O line connected thereto to the downhole controller. After such shifting of the counted data is completed, the sequencer circuit thence appropriately generates a counter reset signal delivered to the counter in the interface and re-enables a gate interconnected between the counter input and the source of pulse train data external to the interface which is delivered to the gate and thence to the counter, so as to enable the counter to resume counting during a next time frame.

A common command and clock line is provided to each command and clock input of each of the interfaces, which are arranged in parallel. The command line carries a digital command pulse instructing all interfaces that an address field will be transmitted on the data line to all interfaces in order to address the desired interface. The clock line carries clock pulses for timing of the interfaces. Additionally, however, a DC level is impressed on the command and clock lines by a single power supply. Each interface is provided with a rectifier and filter network interconnected across the command and clock lines, whereby the rectified and filtered DC level on the lines is utilized for powering each interface.

A first multiplexer is provided between the data line from the controller and the data input of the interface. A second multiplexer is provided between the data line interconnected to the controller and any desired analog voltage signal source in the sonde. Both multiplexers are controlled by a command output from the interface whereby during presence of the particular command output one multiplexer will be activated, and during the absence of said command output the remaining multiplexer will be enabled, the command outputs being generated by the interfacing response to a correlative command transmitted on the data line from the controller to the interface. When the first multiplexer is activated, digital data may be transmitted between the controller and the interface on the data line and through the first multiplexer. In the alternative, when the second multiplexer is activated, analog voltages from the analog voltage source may be impressed upon the same data line for transmission to th controller.

In another embodiment, the command outputs of a first interface are utilized to activate and control the direction of rotation of a motor utilized in the sonde for any of a number of purposes. Energization of a motor in either direction in turn generates a positive status voltage which is communicated to the data input of a second interface as well as being presented to the I/O gating logic of the first interface. The address straps of the second interface are wired in the low condition such that the presence of the high status bit will not match the address field of the second interface and will not thus activate the second interface, whereas the status bit will be passed through the I/O gating logic of the first interface and onto the data line to the controller which will thus detect that the motor is presently being activated and the first interface is thus busy. When the motor completes operation due to limit switches or the like, the status voltage·goes low which, in turn, is delivered on the same line of the high status voltage indication to both the I/O gating logic input of the first interface and the data input to the second interface. The first interface may then be addressed by the controller and an appropriate command delivered thereto in order to generate an output command from the first interface delivered to the command input of the second interface, thus enabling the second interface to decode address data thus presented from the low status bit to the data input of the second interface which, in turn, activates the second interface. The counter of the first and second interfaces, respectively, receive pulse trains from a suitable data source such as a motor tachometer on a radioactivity tracer motor, whereby the first interface may count pulses in one direction and the second interface may count pulses in the second direction, a comparison of the two respective counts indicating the positioning of the motor shaft. Accordingly, as aforementioned, the first interface may be addressed from a command from the controller from the first interface which in turn generates a command output transmitted to the command input of the second interface so as to enable the second interface, due to the matching of the low status signal on the data input of the second interface and the address straps, so as to cause the second interface to transfer count data through its data line output to the I/O gating logic of the first interface and thus out the data line of the first interface to the controller.

In like manner, the first interface may be addressed when the low status voltage of the first interface is otherwise inactive, so as to cause the count data of the first interface to be transmitted to the controller whereby a comparison of the two counts from the respective first and second interfaces may be compared to determine status of the tracer motor shaft orientation.

It is an object of this invention to provide an improved interface between a downhole logging tool and an associated subsurface data acquisition, control and telemetry system.

It is another object of the present to provide a universal interface adapted for use between a wide variety of differing logging tools and a downhole microprocessor data acquisition, telemetry and control system controller.

A further object of this invention is to provide a universal interface for use with a wide variety of differing logging tools fashioned on a monolithic substrate.

Yet another object of the present invention is to provide a universal interface adapted to receive from an external logging tool source and transmit to an external data I/O line digital logging data either substantially in the form in which it is received or, in the alternative and in response to a command signal from a subsurface controller, a function of such data including pulse counts and the like.

Still another object of the invention is to provide an interface between a downhole microprocessor and a logging tool wherein, in response to one of a plurality of commands from the microprocessor, an associated one of a plurality of functions of the logging tool may be selectively controlled.

Yet another object of the present invention is to provide for transmission of digital and analog data on the same data line between a subsurface controller and an interface.

It is a further object of the present invention to provide a plurality of interfaces powered from the same D.C. power source, wherein the power is provided by means of common command and clock lines communicated to a plurality of interfaces.

Still another object of the invention is to provide improved means of checking status of a peripheral device disposed in a logging sonde.

Still another object of the present invention is to provide improved means for obtaining count data from a plurality of pulse sources associated with the logging sonde by means of a corresponding plurality of interfaces whereby each interface, which is selectively addressable, is provided with a counter for counting a respective one of said pulse trains.

## BRIEF DESCRIPTION OF THE DRAWINGS

These and other objects and advantages are hereinafter set forth in greater detail with reference to the drawings, wherein:

Figure 1 depicts an overall schematic diagram of a well logging system employing the present invention.

Figure 2 is a more detailed block diagram of the subsurface data acquisition, control, and telemetry system depicted in Figure 1.

Figure 3 is a more detailed block diagram of the remote controller depicted in Figure 1 embodying the present invention.

Figure 4 is a timing diagram depicting operation of the remote controller of Figure 3.

Figure 5 is a schematic diagram of another embodiment of the present invention.

Figure 6 is a schematic diagram of yet another embodiment of the present invention.

## DETAILED DESCRIPTION OF THE DRAWINGS

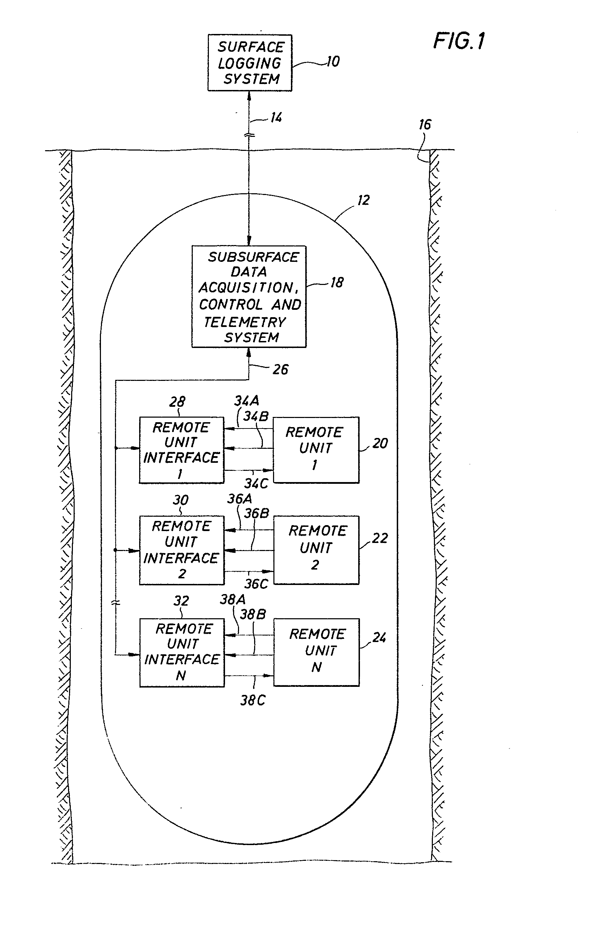

Referring first to Figure 1, a well logging system is therein depicted which is adapted for use in conjunction with the universal interface of the present invention. The system therein depicted preferably includes a surface logging system which may be of a variety of configurations well known in the art, a logging sonde 12 and a logging cable 14 interconnected between the surface system 10 and the sonde 12, the purpose of which is to provide for mechanical support and movement of the sonde 12 within a borehole 16 as well as to provide electrical power and telemetry connections therebetween.

Disposed within the sonde 12 there will be seen a subsurface data acquisition, control, and telemetry system 18, which both receives and transmits signals on cable 14 as well as on a three state instrument bus 26 which, in turn, is interconnected to any desired number of universal interfaces of the present invention schematically depicted in Figure 1 as interfaces 28, 30, and 32. Each such interface is disposed between a corresponding logging tool or remote unit 20, 22, and 24 and the system 18, such remote units comprising what is conventionally known as the "tool string" of the sonde 12. Interface 28 and its corresponding remote unit 20 are functionally interconnected by corresponding digital output 34a, pulse train output 34b, and tool control output 34c, the purposes of which will be hereinafter described. In like manner, interface 30 and remote unit 22 are interconnected by outputs 36a-c and interface 32 and remote unit 24 are similarly interconnected by outputs 38a-c.

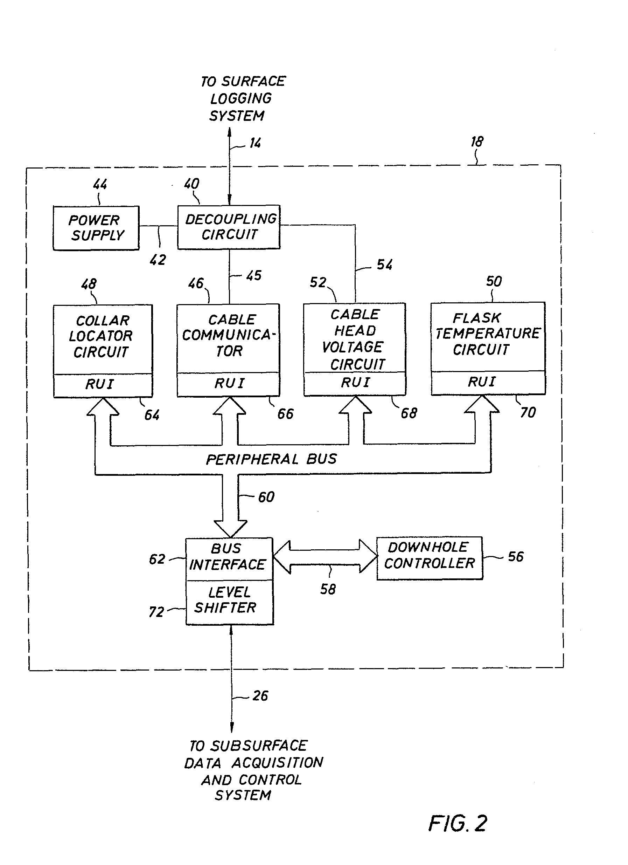

Referring now to Figure 2, a more detailed block diagram of the subsurface system 18 depicted in Figure 1 may be seen. A decoupling circuit 40 may be conventionally provided which will deliver power from cable 14 on power line 42 to an appropriate power supply 44 which will be decoupled from telemetry information carried on communication line 45 and delivered to a suitable cable communicator 46.

There will also be seen in Figure 2 a number of circuits generally not associated with the various logging tools of the logging string whose purpose is to derive downhole information of general applicability regardless of the particular logging tools being utilized. Examples of such data might include means in the sonde 12 for detecting traversal of the sonde 12 by casing collars as it traverses the borehole 16, such circuit being indicated in Figure 2 as collar locator circuit 48. As but another example, it is frequently desirable to monitor the downhole power supply voltage being delivered to the decoupling circuit 40, a function which may be accomplished by delivering the cable head voltage on a cable head monitoring line 54 to an appropriate cable head voltage circuit 52 well known in the art. As but one additional example, it is often desirable to monitor the flask temperature of a flask disposed in the sonde 12 whose purpose is to carry coolant for cooling electronic circuitry disposed in the flask, and accordingly, there may be seen further depicted in Figure 2 a flask temperature circuit 50 for monitoring such temperature.

Due to the increased complexity and sophistication of modern day logging tools and the availability of digital electronics suitable for downhole applications, the desirability for providing downhole computer capability interfacing between the surface system 10 and the plurality of remote units such as 20, 22 and 24, has become apparent. Thus, still referring to Figure 2, it will be noted that subsurface system 18 may preferably be provided with a downhole controller 56 taking the form of one of several currently available microprocessors.

One desirable feature of such a controller 56 is to enable it to communicate with not only the aforementioned circuits 48, 52, and 50, but also with the cable communicator 46, and thus the surface system 10, as well as with the various remote units 20, 22 and 24.

Accordingly, each such circuit is provided with respective remote unit interfaces 64, 66, 68, 70, 28, 30 and 32 of the present invention. A bus interface 62 may further be provided to which are connected data clock and command lines of a peripheral bus 60, said lines also being routed to the interfaces 64, 66, 68 and 70, the bus interface 62 further being interconnected by means of bus 58 to downhole controller 56 whereby the data, command, and clock lines of the peripheral bus 60 are in communication with the downhole controller 56.

In like manner, as aforementioned, it is desirable to permit the downhole controller 56 to communicate with the various remote units 20, 22 and 24 through their respective interfaces 28, 30 and 32. Accordingly, still referring to Figure 2, a three state instrument bus 26 having data, command, and clock lines such as those of peripheral bus 60 are shown interconnected between downhole controller 56 and the remote unit interfaces 28, 30, and 32 for such purpose. In some instances the logic and other signal levels on which the remote unit interfaces 28, 30 and 32 operate may differ from the voltage levels at which the downhole controller 56 may desirably operate, and accordingly, interconnected between the bus interface 62 and the remote unit interfaces, a level shifter 72 may be provided.

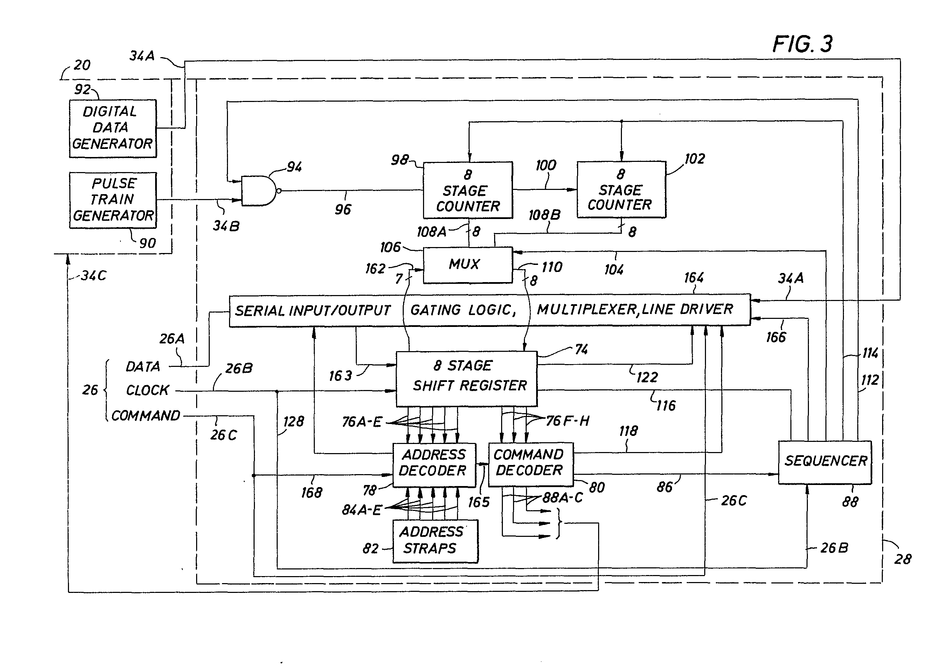

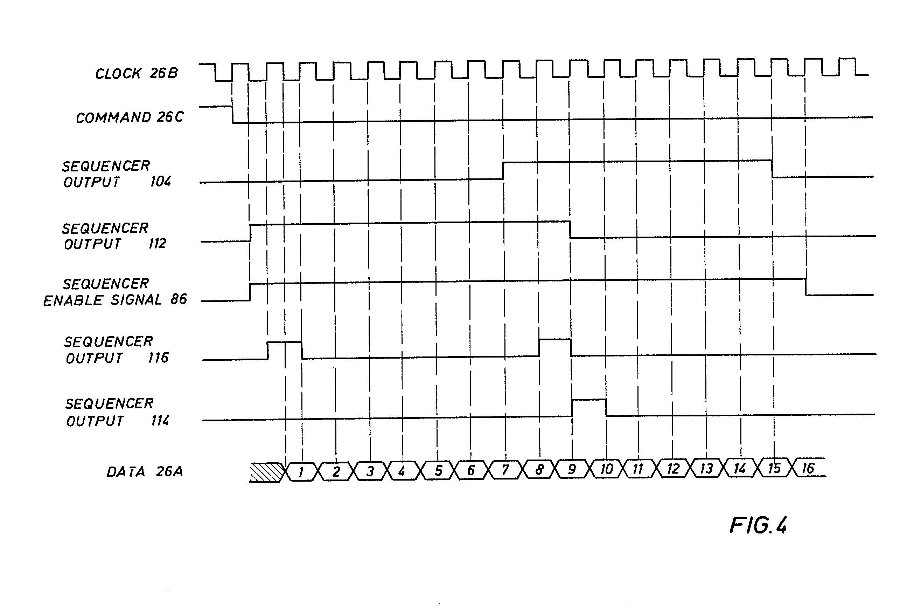

Referring now to Figure 3, a more detailed functional block diagram of the remote unit interface 28 may be seen. As aforesaid, it is one of the features of the present invention that need for custom designing of interfaces for particular applications has been obviated. Thus, although description of the remote unit interface 28 of the present invention will be hereinafter described with reference to Figure 3 and 4, it will be appreciated that such description may be equally apply to an identical remote unit interface such as interface 64, 66, 68, 70, 30 or 32.

Referring now to Figure 3, it will first be noted in general that the interface 28 is interconnected to the downhole controller 56 of subsurface system 18 by means of the aforementioned three state instrument bus 26, which, in turn, comprises data line 26a, clock line 26b, and command line 26c. Interface 28 is disposed between said instrument bus 26 and its respective logging tool 20 with interconnections between interface 28 and tool 20 being functionally depicted as outputs 34a, 34b, and 34c.

The overall purpose of interface 28 to be hereinafter described in more detail, is to provide the capability of recognizing when the downhole controller 56 wishes to "talk" to it, to receive various kinds of data from the tool 20 in response to commands from the downhole controller 56 on bus 26 to deliver such data on the bus 26 to downhole controller 56, and finally to receive commands on bus 26 which may be thereafter delivered to the logging tool 20 for controlling a plurality of operations of the logging tool 20 under control of the downhole controller 56 (which, in turn, may be controlled if desired from the surface system 10).

Referring now in more detail to Figure 3 with reference to the accompanying timing diagram of Figure 4, a command on command line 26c from downhole controller 56, when in a logical high state, indicates that a command is about to be delivered on data line 26a from control system 18 and thus either from the surface system 10 or the downhole controller 56 residing in the subsurface system 18. In that, as aforementioned, a number of logging tools and other circuits may be interconnected to the same bus interface 62, it is first desirable to provide some means whereby only one such circuit may have exclusive access to the bus for purposes of data I/O. Accordingly, a means is first desired for enabling the downhole controller 56 to be able to selectively address any desired remote unit interface and its corresponding circuits.

Thus, the command signal 26c is delivered to a serial I/O gating logic, multiplex, and line driver circuit (hereinafter designated I/O gating logic 164), whereby the gating logic in I/O gating logic 164 interconnects the data line 26a via I/O gating logic 164 and data input line 163 to an eight stage shift register 74. An eight bit word to be hereinafter described coming in on data line 26a is thence shifted into shift register 74 via gating logic 164 and data input line 163, being clocked in by clock 26b interconnected to shift register 74 on the negative edges of the clock. The aforementioned word consists of a unique five bit address which is thence present on address field lines 76a-e and corresponds to the particular interface 28 being addressed, and a three bit command word present on command field lines 76f-h.

On the trailing edge of command 26c delivered on line 168 to an address decoder 78 after the eight bit word has been shifted into shift register 74, the address decoder 78 will compare or decode the bits on shift register output lines 76a-e with corresponding address strap lines 84a-e from address straps 82, said straps being set to correspond to the unique desired address field for the particular interface 28 with which it is associated. If a match is thus decoded by decoder 78 between the bits on lines 76a-e and lines 84a-e from the address straps 82, an asynchronous latch in address decoder 78 latches when the command signal on line 168 to address decoder 78 goes low. This in turn produces an "address valid" output 165 out of address decoder 78 as well as an enable signal 128 enabling I/O gating logic 164 such that interface 28 thereafter has exclusive access to the serial I/O bus 26 regardless of the particular command in the command field 76f-h, such control continuing until a next interface device address is received when the command signal 26c again goes high.

Still referring to Figures 3 and 4, a command decoder 80 is provided which is enabled by the "address valid" output 165 in order to permit the command decoder 80 to output on command outputs 88a-c and 86 a function of its command field of three bits delivered to command decoder 80 on command field lines 76f-h. It will be appreciated that it is a matter of choice whether the command field 76f-h should be fully decoded, partially decoded, or not decoded at all by command decoder 80 internally of the interface 28. Moreover, it should further be appreciated that in the given embodiment wherein three command bits are provided, a total of eight distinct commands, once decoded, are thus available once the interface 28 is addressed. These commands are for purposes of controlling various functions either internally of the interface 28 or for controlling functions in the logging tool 20 with which it is associated by means of delivering such commands externally of the interface 28 to the particular tool 20. The three command outputs 88a-c are intended to functionally represent a plurality of different commands shown collectively as outputs 34c which can be sent to the logging tool 20 to instruct it to perform various functions. These functions may include, for illustrative purposes, the opening of calipers or pads, performing reset functions, sending different data counts or other data residing in the tool 20 to the interface 28 (and thereafter, by means of the instrument bus 26, to the downhole controller 56 and, ultimately, if desired, to the surface logging system 14.)

One such command hereinafter more particularly known as sequencer enable signal 86 functionally represents one command from the command field 76f-h which is preferably internal of the interface 28. The purpose of such a command may be twofold. First one command on sequencer enable signal 86 may cause a sequencer circuit 88 within interface 28 to generate a sequencer output 166 to serial I/O gating logic 164. This, in turn, will permit the gating logic 164 to pass a train of pulses generated by a digital data generator 92 portion of logging tool 20 through interface 28 via output 34a, serial I/O gating logic 164, and data line 26a. This pulse train may be distinguished from an output 34b, also delivered to interface 28 from a pulse train generator 90 contained in logging tool 20 (to be hereinafter described), in that the pulses on output 34a are not counted by interface 28 and the final results of the count are not delivered to the serial I/O gating logic 164 and thence to the output 26a. Rather, bits on 34a pass through the interface 28 unaltered, and thus may be status bits indicating the various conditions of logging tool 20, or, in but another example, a train of pulses to be counted by the downhole controller 56.

Referring now more particularly to the operation of interface 28 wherein the aforementioned counting sequence is initiated by sequencer enable signal 86, it will first be appreciated that situations may arise in a logging tool 20 wherein a sub-unit is present (functionally represented by the pulse train generator 90) wherein desired information to be recovered resides in a pulse count on output 34b. But one simple but illustrative example may be in the case of gamma ray logging wherein it may be desired to count the number of gamma rays incident upon tool 20. Yet another example might be in an application wherein a motoring device is included in tool 20 and it is desired to count tachometer pulses associated with the motor, whereby the total count is functionally indicative of the number of revolutions of the motor (as, for example, in applications wherein it is desirable for the downhole controller 56 to know the positioning of a basket in a basket-type flow meter disposed within the borehole 16).

In such applications, it is desirable to provide interface 28 with a suitable pulse counter whereby the aforementioned pulse train generated in the logging tool by pulse train generator 90 may be delivered to the interface 28 through output 34b for counting prior to the interface 28 delivering the cumulative result on data line 26a. In such a case, a differing sequencer enable signal 86 corresponding to a different command field bit pattern 76f-h will cause the sequencer 88 to initiate various command signals to be hereinafter described to effect the pulse counting and delivery of the resultant pulse count on data line 26a.

Still referring to Figure 3, it will be seen that output 34b on which resides the pulse train is delivered through gate 94 and thence on gate output 96 to a sixteen bit ripple counter comprised of two eight stage counters 98 and 102 interconnected by line 100. Gate 94 is gated by an output 112 of sequencer 88 so a to pass pulses on output 34b to the sixteen bit counter only at desired times to be described. As pulses are delivered on gate output 96 to the counters 98 and 102, their cumulative counts will be delivered continually on respective counter outputs 108a and 108b to a suitable multiplexer 106. The sequencer 88 also provides an output 104 which causes the multiplexer 106 to connect the outputs either from counter 98 or 102 to shift register 74, the eight bits of which are thus shifted into shift register 74 from multiplexer 106 on multiplexer output 110. These eight bits are shifted in parallel fashion from multiplexer 106 to shift register 74 during one clock pulse, and are thereafter shifted out serially from the shift register 74 on shift register output 122 into serial I/O gating logic 164, and thereafter shifted out serially on data line 26a during that clock pulse and the seven following. clock pulses. Sequencer 88 thence generates a next signal on sequencer output 104 which, in like manner, causes multiplexer 106 to deliver in parallel the eight bits of the remaining one of counters 92 and 102 to shift register 74 on multiplexer output 110 during the next clock pulse. These eight bits are then, in like manner, serially shifted out of shift register 74 through shift register output 122 into I/O gating logic 164 and thence out on data line 26a.

Referring more particularly to shift register 74 for a moment, it will be noted that Figure 3 functionally depicts a seven line and eight line connection 162 and 110, respectively, between multiplexer 106 and shift register 74, with a control line 116 running to shift register 74 from sequencer 88. The reason for this is that the inputs to the various stages of shift register 74 vary in configuration depending upon the function the shift register 74 is performing at a particular moment. When shift register 74 is receiving eight bits of parallel data from either counter 98 or 102 as previously described, each input stage of shift register 74 is connected to a particular output bit of the counter 98 or 102, as represented by multiplexer output 110 under control of sequencer output 116.

However, when, after one clock pulse, all eight bits have thus been parallel-shifted out from either counter 98 or counter 102, through multiplexer 106 on multiplexer output 110 to shift register 74 and it is thereafter desired to serially shift these bits out on serial I/O bus 26a, shift register 74 must change configuration to a conventional eight stage shift register wherein the input of one stage is connected to the output of the proceeding stage in serial or "daisy chain" fashion conventionally known in the art. This may be seen functionally depicted in Figure 3 by lines 162 between multiplexer 106 and shift register 74 and by the control line 116 from the sequencer 88, which serves to reconfigure shift register 74 in the aforementioned manner at an appropriate time to be hereinafter described with reference to the timing diagram of Figure 4.

Thus, while shift register 74 has been termed an eight stage shift register, it is more accurately described as a synchronously presettable eight stage shift register with dual selectable inputs to each stage - synchronous in that the eight bits from either counter 98 or 102 are clocked into shift register 74 in parallel during one clock pulse. The "dual" refers to the fact that the input to each stage may come from either the output of the preceeding shift register stage in typical shift register fashion, or, during loading of the eight bits, the inputs may come from multiplexer 106 dependent upon the status of sequencer output control signal 116.

Shift register 74 further differs from a typical presettable shift register in that each stage, via multiplexer 106 and control line 104 is presettable from one of two input sources - either counter 98 or 102.

Referring briefly to the timing diagram of Figure 4 in conjunction with Figure 3, a few further points should be noted. As previously described, when command 26c is low and interface 28 is appropriately addressed as previously described, interface 28 has exclusive access to the data line 26a as shown in Figure 4. Next, the timing diagram of Figure 4 clearly shows that sequencer 88 is enabled by command 26c during an entire sixteen bit data output sequence on data line 26a. It will also be noted that sequencer output 104 changes state eight clock pulses after the sequencer output cycle commences, reflecting that multiplexer 106 has been commanded to deliver the parallel outputs of the remaining one of counters 98 or 102 to shift register 74 only after the other outputs of counter 98 or 102 have thus been delivered to shift register 74 and shifted out serially in eight clock pulses.

Still referring to Figures 3 and 4, it will further be noted from sequencer output 112 that the counters 98 and 102 are only gated off until the second of the two sets of eight bits has been shifted out of counters 98 and 102 and stored in shift register 74 ready for serial shifting out through serial I/O gating logic 164 onto data line 26a, at which time the counters 98 and 102 are gated back on by sequencer output 112, reset by sequencer output 114 and thereafter permitted to accumulate counts once again appearing on output 34b from the pulse train generator 90 of logging tool 20.

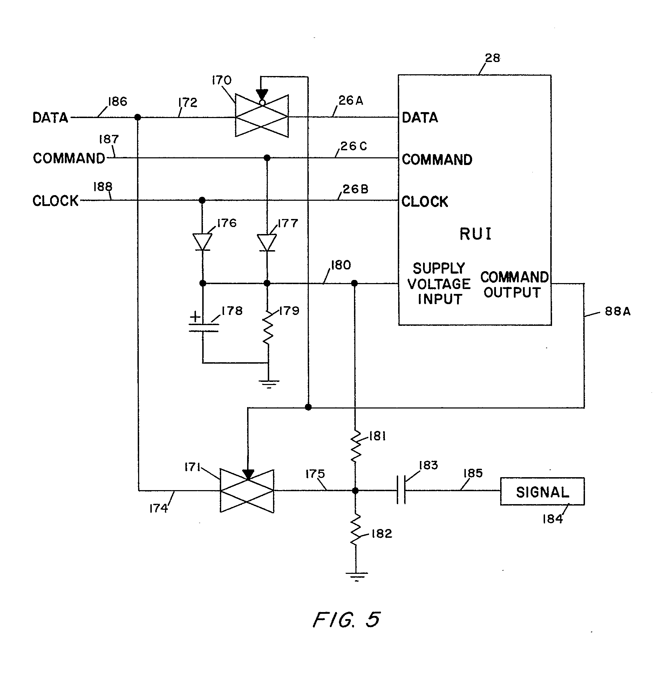

Referring now to Figure 5 there will be seen depicted therein an embodiment of the present invention utilizing a remote unit interface 28 including the data, clock, and command lines 26a-c depicted in Figure 3. In the embodiment of Figure 5, it will be noted that multiplexers 170 and 171 interposed between interface 28 and data line 186 (which is routed to the aforementioned downhole controller 56). The multiplexers 170 and 171 are, in turn, under control of one of the previously described command outputs of interface 28, in this case illustrated as command output 88a for purposes to be hereinafter described. Thus, when the multiplexer 170 is activated in response to command output 88a digital data may be transferred on line 172 from the data line 186 through the multiplexer 170 and on data line 26a to the interface 28. Conversely, digital data may be transferred out of the interface 28 on line 26a through multiplexer 170, and further on data lines 172 and 186 to the downhole controller 56.

As previously described, numerous analog signals may be present in the logging sonde which are desired to be acquired, one such representative signal being depicted in Figure 5 as signal 184, which may be generated by any conventional transducer or the like. The analog output 185 thereof may be conventionally coupled by capacitive means functionally indicated by capacitor 183 on line 175 to multiplexer 171. As with multiplexer 170, in response to command output 88a, multiplexer 171 may be activated alternately with multiplexer 170 to thereby transfer the analog signal 184 through the multiplexer 171 on the multiplexer line 174 to the data line 186. Thus it will be appreciated that the data line 186 may either carry digital signals between the interface 28 and the downhole controller 56, or, in the alternative, may carry analog signals from the analog signal source 184 to the downhole controller 56 (after which, of course, they may be converted to digital form by an appropriate analog-to-digital converter not shown), or the analog signal may be routed, under control of the downhole controller 56 to any other suitable destination.

Still referring to Figure 5, it is readily apparent that the interface 28 circuitry of the present invention must be provided with an appropriate power source. Thus, a closer view of Figure 5 reveals that interconnected to the command 187 and clock 188 lines may be a conventional D.C.power supply network comprised of and functionally depicted by a pair of diodes 176 and 177 interconnected to the respective command and clock lines 188 and 187, and a conventional capacitor 178 and resistor 179 network. It will be recalled that conventionally command and clock lines carry pulsed or digital data for the aforementioned purposes, with power supply voltages being provided on yet a different line. Moreover, each interface 28 would typically be expected to have its own dedicated power supply regulation. However, in the embodiment depicted in Figure 5, although the same command lines 187 and 26c and clock lines 188 and 26b may be routed to a plurality of interfaces 28, 30 and 32 arranged in parallel to the aforesaid lines 187, 26c, 188 and 26b, and although these command and clock lines may carry digital data as aforementioned, they may also carry D.C.power supply voltage levels upon which the digital data may ride.

Accordingly, although the appropriate respective digital data will be delivered to the command and clock inputs of the interface 28 by means of the command line 26c and clock line 26b, a D.C.supply voltage will thus be available at the junctions of the diodes 176 and 177 and the capacitor 178 and resistor network 179, and this supply voltage may be delivered on line 180 to the interface 28 as well as multiplexer 171 through resistor network 181 and 182. Thus, in summary, in the embodiment depicted in Figure 5, not only has provision been made for delivering both analog and digital data on the data line 186, but further provision has been made for powering a plurality of interfaces such as 28, 30, and 32 by means of the same power source. Moreover, this D.C. power source may be delivered on the identical lines on which the command and clock pulses are carried which are delivered to the interfaces 28, 30, and 32 for the purposes previously described.

It will further be noted from Figure 5 that by powering additional interface devices such as 30 and 32 (not shown in Figure 5) connected in parallel to the same power source on command line 187 and clock line 188, this avoids large current flow between the devices on these lines which may occur if they were provided with separate power supplies running off the same power supply lines. Thus, shunting of each device to the supply voltage rails on the lines 187 and 188 when each has its own supply is avoided.

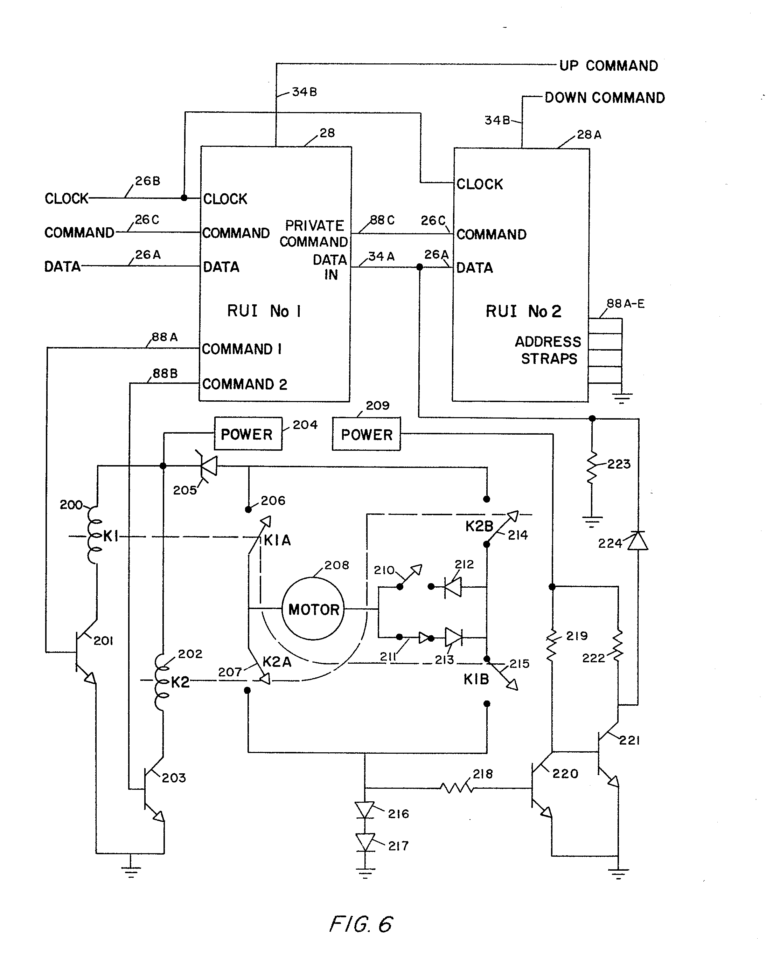

Referring now to Figure 6, there will be seen depicted therein two interfaces 28 and 28a arranged in tandem. The purpose for depicting the embodiment of Figure 6 is to illustrate several aspects of the versatility of the interfaces 28, 30 and 32 of the present invention. Specifically, in the embodiment thus depicted such interface may be utilized first for purposes of controlling a peripheral device (in the illustrated case, a powered centralizer), and may include indications of the status thereof to the downhole controller 56 in a manner to be hereinafter described. Moreover, in the Figure 6 embodiment of the present invention utilization of the counter capability of each interface in an inter-related fashion also to be hereinafter described in more detail is illustrated. More particularly, Figure 6 depicts an application of a plurality of interfaces wherein data counts of two differing but related types may be acquired by respective counters in each interface, namely up and down counts indicating, respectively, direction and amount of motor shaft rotation, for example, of a basket-type flow meter.

Still further, Figure 6 depicts an additional feature wherein the same address is used to control two interfaces. More specifically, a first interface may be addressed and a plurality of commands decoded by it utilized to perform various command functions. However, one particular command thus decoded is utilized as the command input to a second interface to enable the second interface to decode a status signal command present on its data input/output and generated from a peripheral source. This decoded command, in turn, causes the counter output of the second interface to be delivered on its data input/output port to the input 34a of the first interface. The count of the second interface is thus delivered through the first interface on the data input/output port of the first interface to the downhole controller.

Referring first to the application wherein it is desired to control a peripheral device, various centralizers are well known in the art which provide a function of selectively controlling the vertical orientation of a logging sonde relative to the vertical borehole elevation for numerous purposes. One such purpose occurs when it is desired to measure flow rates
through the borehole, and, more particularly, for
example, differences in flow rates between the center of
the annulus and the periphery of the borehole wherein a
basket-type flow meter, also well known in the art, may
be employed.

In such applications, it is desirable to first
orient the logging sonde and thus the flow meter in the
center of the borehole to measure flow rates proximal
thereto, and then to relocate the sonde and flow meter
forming a part thereof adjacent the borehole wall for
purposes of measuring the flow rate therealong. In the
case of application of such powered centralizers, it is
conventional to provide a motor for controlling the
positioning of the centralizer arms along the borehole
whereby rotation of the motor in one direction will
cause the arms to position the sonde in a location
generally within the center of the borehole, and
conversely, rotation of the motor in the opposite
direction will cause the centralizer arms to in contact
with the borehole walls to move the sonde in a direction
toward the walls.

Thus, referring to Figure 6 in more detail, it
will be seen that a bi-directional servo motor 208 is
provided for effecting the aforementioned movement of
the centralizer arms. Upon receipt of a command signal
26c, an appropriate command and address field is
delivered on data line 26a, and stored in interface 28
for decoding. Assuming it is desired to move the
centralizer arms in one direction, one of the commands
decoded by interface 28 (after the unique address field
associated with interface 28 is recognized or decoded by
interface 28 permitting decoding of the command field)
may be command 88a which, with further reference to Figure 6, will turn transistor 201 on permitting power from a suitable power source 204 to energize coil 200. This coil 200, in turn, is ganged to pull in switches 206 and 215 whereby D.C. power is applied through zener diode 205, switch 206, motor 208, limit switch 211, diode 213, switch 215, and diodes 216 and 217 to cause the motor to rotate in one direction until a limit is reached detected by limit switch 211. It will be noted that during rotation of the motor because of the double diode drop caused by the diodes 216 and 217, the transistor 220 will be biased in the on condition pulling the collector thereof toward ground whereby transistor 221 is turned off. In this manner, power provided by a power source 209 is delivered through resistor 222 through diode 224 and resistor 223 to provide a high status indication on line 34a and data line 26a of respective interfaces 28 and 28a for purposes to be hereinafter described.

Assuming now, for the moment, that it is desired to move the centralizer arms in the opposite direction, an appropriate command 88b decoded by interface 28 will be delivered to the base of transistor 203 which, in like manner to operation of transistor 201, will be turned on such that power from source 204 will be delivered so as to activate coil 202. This coil, similar to that of coil 200, is ganged to a switch 214 which is pulled in upon activation 202, such that power is delivered from power source 204, through zener diode 205, through switch 214, diode 212, limit switch 210, through motor 208, through switch 207 (also ganged to coil 202), and diodes 216 and 217, thus rotating the motor 208 in the opposite direction and positioning the centralizer arms connected thereto in the opposite direction. This will continue until such time as the limit switch 210 detects that the motor is at the opposite limit of its travel whereupon limit switch 210 opens. However, as with rotation of the motor 208 in the opposite direction, until the limit switch 210 opens, it will be appreciated that flow of current through diodes 216 and 217 will, in like manner, bias transistor 220 in the on condition, transistor 221 in the off condition, whereby voltage is again impressed upon the collector of transistor 221 from power source 209, thus yielding a high status level for delivery to lines 34a and 26a of interfaces 28 and 28a, respectively.

In summary, then, commands 88a and 88b from interface 28 will cause the centralizing motor 208 to either open or close the centralizing arms until they reach their extremes. Moreover, during such movement in either direction, a high status level will appear on the collector 221 which will be delivered to interfaces 28 and 28a until such time as the motor 208 is rotated to either extreme, whereupon after opening of one of the respective limit switches 210 or 211, the status level of the collector of 221 will go to the low condition, thus transmitting a low status bit to interfaces 28 and 28a. Due to the prior description of the utilization of the signal of line 34a relating to Figure 3, it will be appreciated that upon interrogation of the data line 34a by the downhole controller 56, the high or low status of line 34a may be delivered on the data line 26a to the downhole controller 56. In this manner, the downhole controller 56, will know whether the interface 28 and related motoring circuitry is in the "busy" or "not busy" condition.

Referring now to the additional features depicted in Figure 6 wherein it is desired to acquire differing counts by interfaces 28 and 28a, it will be noted that in but one application, it may be desirable
to know a particular number of revolutions which have
occurred with respect to a motor shaft as well as the
direction of such revolutions.  For example, in one
application already mentioned and well known in the art,
it is conventional to provide a basket-type flow meter
disposed within the borehole.  Conventionally, direction
of rotation of the shaft of the flow meter is indicative
of direction of flow and the rate of revolution is
indicative of rate of flow.  A tachometer is interconnected with the shaft to produce two series of pulse
trains each associated with a respective direction of
rotation of the shaft, with the frequency of the pulses
functionally related to the rate of turning of the shaft.
It will accordingly be appreciated that by counting the
pulses of the two pulse trains and periodically interrogating the counters and comparing the relative counts,
an indication may be derived of direction and magnitude
of flow through the borehole.

In such applications, it will further be
appreciated that with reference to Figure 6 that the
counters 98 and 102 of interface 28 may be employed to
count 1 of such pulse trains and the counters 98 and 102
of the remaining interface 28a utilized to count the
other pulse train, such pulse trains appearing,
respectively, as the up counter input 34b and down
counter intput 34b.

Referring now more particularly to the function
of the embodiment of Figure 6 wherein the cumulated
count of interfaces 28 and 28a are desirably interrogated
by the downhole controller 56, it will be recalled that
when a command input 26c of a particular interface is in
the high state, the interface is enabled to receive
command and address fields on its data input line 26a, and that when the command input 26c is in the low state, the particular interface may decode the address and command fields and act upon the decoded command. Thus, when the command input 26c of interface 28 is in the high condition, an address and command field is clocked into the shift register of interface 28 on the data input line 26a. Because the address and command have not as of yet been decoded, commands 88a and 88b are still low. However, the private command 88c, in this application, is preferably inverted whereby it remains in the high condition during clocking of the address and command fields into interface 28.

Because commands 88a and 88b of interface 28 are low, the motoring circuit 208 is inactive, .and, accordingly, as previously described, the status bit appearing across the pull down resistor 223, and thus the data input 34a of interface 28 and data input 26a of interface 28a are low. Because the private command 88c of interface 28 is interconnected to the command input 26c of interface 28a, and because the commands are in the high state enabling the clocking-in of address and command fields into interface 28a, zeros appearing on data input 26a of interface 28a are clocked into the shift register of the second interface 28a. It will thus be appreciated that an address and command field comprised of all zeros is thus been transferred into interface 28a.

While the command input 26c of interface 28a is in the high condition, if the controller 56 desires to interrogate or control any functions associated with interfaces 28 or 28a, the address field delivered on data line 26a to interface 28a by the controller 56 during the period in which the command 26c is high will correspond to the address strapping of the first interface 28 (not shown in Figure 6). Moreover, during the aforesaid clocking in of the address and command field to interface 28, the command field will correspond to the particular desired function to be performed by interfaces 28 or 28a, e.g., the controlling of motor 208, the interrogation of the counts in interface 28 corresponding to up counter pulse train input or interrogation of counts corresponding to the down counter input 34b residing in interface 28a, or the like.

Still referring to Figure 6, when the command line 26c goes low, the address and command field thus stored in the shift register of interface 28 is examined, and a match of the address field to the address strapping of interface 28 is looked for or decoded by interface 28. If a match is detected, the command field stored in the shift register of interface 28 is thereafter decoded. As aforementioned, numerous commands may be thus decoded. As but one example, if the command field is comprised of all zeros, the decoder of interface 28 may be wired so as to deliver a command to the sequencer of interface 28 so as to cause the counters in interface 28 to deliver their cumulative count results on the data line 26a to the controller 56. It will be appreciated that until a private command 88c has been decoded by interface 28, the private command 88c will remain in the high condition. Accordingly, because this private command 88c is delivered as command input 26c to interface 28a, the interface 28a does not yet act on any address or command field just clocked in to interface 28a.

Assuming that the aforementioned command field residing in interface 28a is decoded as a command 88a or 88b, it will be appreciated from the foregoing description of the motoring circuit 208, that the commands 88a or 88b will cause the motor 208 to motor in its respective direction until the limit switches 210 or 211 are activated. While motoring is occurring, it will further be recalled that the status bit appearing across dropping resistor 223 will be in the high condition and delivered to the data input line 34a of interface 28. The controller 56 may thereafter deliver an address and appropriate command to interface 28 to permit passage of the data input 34a through interface 28a to the controller 56, and thus the controller 56 may detect the high status on the data input line 34a and may therefore detect the status of the motor 208. It will further be appreciated that if the motoring 208 has ceased, causing the status bit of cross dropping resistor 223 to go to the low condition, a like interrogation of interface 28, and, more particularly, the status of the data input line 34a will reveal that the motor 208 is in the off condition.

Continuing with description of the embodiment of Figure 6, description of the activation of interfaces 28 and 28a when it is desired for the controller 56 to acquire count data thereof will now be described in more detail. One of the aforementioned command fields transmitted to interface 28 may desirably be, for purposes of illustration, a binary "100" or arithematic "4", such a unique command also corresponding to the decoded private command 88c of interface 28 when such a command is decoded (recalling that the private command has been inverted), command output 88c of interface 28 will go to the low condition as will the command input 26c of interface 28a interconnected thereto. The command 26c of interface 28 going in the low condition will cause the interface 28a to examine or decode its address and command fields previously clocked into and
residing in the shift registers of interface 28a.  It
will be noted that the address straps 88a-e of interface
28a have been grounded, and accordingly an address match
will be detected between these address straps 88a-e and
the zeros clocked into the data input 26a of interface
28a when the status bit across dropping resistor 223 is
in the low condition (indicating inactivity of the motor
208).  Thus, the interface 28a will be addressed or
activated to further decode the command field.  The
decoded command of interface 28a will cause the
sequencer thereof to trigger the counters contained in
Figures 28a in a manner so as to deliver the cumulated
count of interface 28a on the data input/output 26a of
interface 28a to the data input line 34a of interface
28.  It will be recalled that when a command input 26c
is in the high condition, an addressed interface will be
granted exclusive access to the data input/output bus
26a, and accordingly, upon address of the interface 28a,
the count data of interface 28a may be passed from its
data output 26a to the data input 34a of interface 28
and through interface 28 on its data output 26a to the
controller 56.

        In this manner, it will be seen that in
response to appropriate commands from the downhole
controller 56, by the combination of interfaces 28 and
28a depicted in Figure 6, first a peripheral device, in
this case, motor 208, may be selectively addressed and
controlled in any desired manner from the controller
56.  Moreover, also due to the arrangement of the
interfaces 28 and 28a, they may be cause to accumulate
count data of any desired type from either two different
sources, or two differing types of accounts from a
similar source (in this case, a motor tachometer).

Counts on line 34b to interface 28 may correspond to
motion of the shaft in one direction and counts on line
34b to interface 28a may correspond to motion in the
opposite direction, such that comparison of counts by
controller 56 will yield relative positioning of the
shaft. Furthermore, such count data may be caused to be
delivered to the downhole controller 56 at a desired
time from either interface 28 or 28a and in response to
commands to either interfaces 28 or 28a from the
downhole controller 56 after interface 28 has been
addressed.

The embodiments of the invention in which an
exclusive property or privilege is claimed is defined as
follows:

The invention may be summarized as follows:

1. In a subsurface well logging system having a controller and an input/output bus interconnected between said controller and a plurality of interface means, a universal interface means for use in plurality each with respective first and second well logging circuits having respective first and second outputs, each said universal interface means comprising:

a counter means for counting pulses from said respective first outputs and having a counter output signal; and

transmission means for receiving said counter output and said second signals and connected to said controller alternatively transmitting in response to said controller said counter output signal or said second output to said controller.

2. The apparatus of 1, further including address decoder means for activating a particular one of said transmission means from said plurality of universal interface means in response to a corresponding respective address command from said controller.

3. The apparatus of 1 or 2, wherein said transmission means includes a sequencer means for resetting said counter means and gating said first output to said counter means.

4. The apparatus of 1, 2 or 3, wherein said counter means and said transmission means are disposed on the same monolithic substrate.

5.    The apparatus of 1,2,3 or 4, further including
a command decoder means enabled by and
interconnected to said address decoder means for
delivering command signals to respective well logging
circuits associated with each said interface means.


6.    A subsurface well logging system,
comprising:
a microprocessor controller means;
an input/output bus means interconnected
to said controller means;
a log data generator means having a data
generator output;
a log data pulse train generator ·means
having a pulse train output;
a log function circuit means; and
a universal interface means interconnected
between said bus means, said data generator means, said
pulse train output and said log circuit means,
comprising:
an address decoder having an address
output;
a sequencer means having first, second,
third and fourth outputs;
a command decoder means enabled by said
address output and having first and second command
outputs;
said first output enabling said log
function circuit means; and
said second output enabling said
sequencer means for coordinating delivery of said data
generator and said pulse train generator outputs to said
bus means;

shift register means interconnected to said bus means;

counter means having a counter output for counting said pulse train output interconnected between said pulse train generator means and said shift register means and being reset by said first sequencer output;

said second sequencer output gating said pulse train output to said counter means;

said third sequencer output gating said counter output to said shift register means; and

said fourth sequencer output gating said data generator output to said bus means.


7. The apparatus of 6, wherein said shift register means is a multiple stage shift register synchronously presettable with dual selectable inputs to each said stage.


8. The apparatus of 6 or 7, wherein said sequencer means includes a fifth output for reconfiguring said shift register means from said multiple stage shift register to a parallel latch.


9. The apparatus of 6 - 8, wherein said counted pulse train output is transferred in parallel to said shift register.

10. The apparatus of 6 - 9, wherein said shift register means serially shifts said counted pulse train output and said data generater output on said bus means to said controller.


11. In a well logging system having a plurality of universal interfaces disposed between a subsurface controller and respective well logging circuits, a method of logging data acquisition and control between said controller and said surface, comprising:

defining a plurality of address codes each corresponding to a different one of said interfaces;

generating a preselected one of said address codes corresponding to a preselected interface;

generating a command code from a plurality of commands comprising at least first and second commands;

transmitting said address and command codes to said interfaces;

decoding said preselected address code in said corresponding preselected interface;

decoding said command code in said preselected interface in response to said decoded address code;

deriving a count of pulses in said preselected interface from a first of said logging circuits;

generating a frame of logging data from a second of said logging circuits;

transmitting said pulse count through said preselected interface to said controller in response to said first command; and

transmitting said frame of logging data through said preselected interface to said controller in response to said second command.

12. The method of        11, wherein said command code includes a third command for controlling a third of said logging circuits.

13. The method of 11 or 12, further including the steps of transferring said pulse count to storage in said preselected interface prior to said transmission of said pulses.

14. The method of        13, further including disabling said counting of said pulses during said transferring of said pulse count to said storage.

15. The method of        14, further including re-initializing said counting of said pulses after said transferring of said pulse count.

16. A universal interface network for interfacing between a plurality of well logging tools and a subsurface controller, comprising:

a plurality of remote unit interfaces, each said interface being interconnected to at least a respective one of said logging tools and having a command input, clock input, and supply voltage input;

a command bus line interconnected to said controller and to each respective said command input of said plurality of remote unit interfaces for carrying commands between said interfaces and said controller;

a clock line interconnected to said controller and to each respective clock input of said plurality of remote unit interfaces for carrying clock pulses to said interfaces from said controller; and

rectifier means for each respective remote unit interface interconnected to said command bus line, said clock line, and said supply voltage input of its respective remote unit interface for providing power from said command bus line and said clock line to the respective one of said supply voltage inputs.

17. The apparatus of        16, further including:

direct current power supply means for impressing a direct current potential level between said command bus line and said clock line.

18. The apparatus of       17, wherein said rectifier means includes:

first and second diode means having their respective anodes interconnected and connected to said supply voltage input, said first diode means having a respective cathode interconnected to said command bus line, and said second diode means having a respective cathode interconnected to said clock line.

19. The apparatus of       18, further including:

filter means for each of said remote unit interfaces each connected to a respective one of said supply voltage inputs.

20. A universal interface for interfacing between a well logging tool and a subsurface controller, comprising:

a remote unit interface interconnected to said logging tool and having a data input, a command input, and a clock input;

a data line interconnected to said controller for carrying data between said controller and said remote unit interface;

a command bus line interconnected between said remote unit interface and said controller for carrying commands to said remote unit interface from said controller;

a clock line interconnected between said remote unit interface and said controller for carrying clock pulses to said remote unit interface from said controller;

a first multiplexer means interconnected
between said data line and said data input;

a signal generator means for generating an
analog signal logging measurement output;

a second multiplexer means interconnected
between said output and said data line; and

said remote unit interface having a
command output interconnected to said first and second
multiplexer means for selectively activating one of said
first and second multiplexers in response to a command
on said data line.

21. The apparatus of    20, wherein said
analog measurement is delivered on said output through
said second multiplexer means and on said data line to
said controller in response to activation of said second
multiplexer means by a first of said command outputs
from said remote unit interface.

22. The apparatus of    21, wherein digital
data is transferred on said data line between said
remote unit interface and said controller through said
first multiplexer means in response to activation of
said first multiplexer means by a first of said command
outputs from said remote unit interface.

23. The apparatus of    22, wherein said
data line carries alternately in response to said first
and second of said command outputs analog signals from
said signal generator and digital signals from said
controller and said remote unit interface.

24.   The apparatus of        23, wherein
generation of said first or second of said command
outputs from said remote unit interface is in response
to a command on said data line from said controller to
said remote unit interface.


25.   An interface apparatus for use with a
subsurface well logging system, comprising:
        a subsurface controller having a
controller clock terminal, controller command terminal,
and controller data terminal;
        a clock line;
        a command line;
        a data line;
        a first remote unit interface having a
first interface clock terminal, a first interface
command terminal, and a first interface data terminal, a
pulse train generator input, a first, second and third
command output, and a digital data generator input, said
clock, command and data lines interconnecting respective
said controller clock terminal, controller command
terminal, and controller data terminal with respective
said first interface clock terminal, first interface
command terminal and first interface data terminal;
        a second remote unit interface having a
second interface clock terminal, second interface
command terminal, and second interface data terminal,
and a second interface pulse train generator input;
        said first command output of said first
interface being interconnected to said second interface
command terminal, and said digital data generator input
of said first interface being interconnected to said
second interface data terminal;

said second interface further including grounded address straps for providing a zero address field to said second interface; and

status detection means for generating a low or high status signal interconnected to said digital data generator input of said first interface and said data terminal of said second interface.

26. The apparatus of 25, further including peripheral circuit means alternatively controlled by said second and third command outputs of said first interface.

27. The apparatus ol 26, wherein said peripheral circuit means is interconnected to said status detection means, and wherein said peripheral circuit means generates a status voltage delivered to said status detection means indicative of electrical activation of said peripheral circuit means.

28. The apparatus of 27, wherein said peripheral circuit means is a bi-directional motor commanded to run in a first direction in response to said second command output and a reverse direction in response to said third command output.

Claims:

1. In a subsurface well logging system having a controller and an input/output bus interconnected between said controller and a plurality of interface means, a universal interface means for use in plurality each with respective first and second well logging circuits having respective first and second outputs, each said universal interface means comprising:

a counter means for counting pulses from said respective first outputs and having a counter output signal; and

transmission means for receiving said counter output and said second signals and connected to said controller alternatively transmitting in response to said controller said counter output signal or said second output to said controller.

2. The apparatus of Claim 1, further including address decoder means for activating a particular one of said transmission means from said plurality of universal interface means in response to a corresponding respective address command from said controller.

3. The apparatus of Claim 2, wherein said transmission means includes a sequencer means for resetting said counter means and gating said first output to said counter means.

4. The apparatus of Claim 3, wherein said counter means and said transmission means are disposed on the same monolithic substrate.

- 46 -                    0108903

5.    The apparatus of Claim 4, further including a command decoder means enabled by and interconnected to said address decoder means for delivering command signals to respective well logging circuits associated with each said interface means.


6.    A subsurface well logging system, comprising:

a microprocessor controller means;

an input/output bus means interconnected to said controller means;

a log data generator means having a data generator output;

a log data pulse train generator -means having a pulse train output;

a log function circuit means; and

a universal interface means interconnected between said bus means, said data generator means, said pulse train output and said log circuit means, comprising:

an address decoder having an address output;

a sequencer means having first, second, third and fourth outputs;

a command decoder means enabled by said address output and having first and second command outputs;

said first output enabling said log function circuit means; and

said second output enabling said sequencer means for coordinating delivery of said data generator and said pulse train generator outputs to said bus means;

0108903

shift register means interconnected to said bus means;

counter means having a counter output for counting said pulse train output interconnected between said pulse train generator means and said shift register means and being reset by said first sequencer output;

said second sequencer output gating said pulse train output to said counter means;

said third sequencer output gating said counter output to said shift register means; and

said fourth sequencer output gating said data generator output to said bus means.

0108903

7.  In a well logging system having a plurality of universal interfaces disposed between a subsurface controller and respective well logging circuits, a method of logging data acquisition and control between said controller and said surface, comprising:

defining a plurality of address codes each corresponding to a different one of said interfaces;

generating a preselected one of said address codes corresponding to a preselected interface;

generating a command code from a plurality of commands comprising at least first and second commands;

transmitting said address and command codes to said interfaces;

decoding said preselected address code in said corresponding preselected interface;

decoding said command code in said preselected interface in response to said decoded address code;

deriving a count of pulses in said preselected interface from a first of said logging circuits;

generating a frame of logging data from a second of said logging circuits;

transmitting said pulse count through said preselected interface to said controller in response to said first command; and

transmitting said frame of logging data through said preselected interface to said controller in response to said second command.

8.    The method of Claim 7 , wherein said command code includes a third command for controlling a third of said logging circuits.


-9.    A universal interface network for interfacing between a plurality of well logging tools and a subsurface controller, comprising:

a plurality of remote unit interfaces, each said interface being interconnected to at least a respective one of said logging tools and having a command input, clock input, and supply voltage input;

a command bus line interconnected to said controller and to each respective said command input of said plurality of remote unit interfaces for carrying commands between said interfaces and said controller;

a clock line interconnected to said controller and to each respective clock input of said plurality of remote unit interfaces for carrying clock pulses to said interfaces from said controller; and

rectifier means for each respective remote unit interface interconnected to said command bus line, said clock line, and said supply voltage input of its respective remote unit interface for providing power from said command bus line and said clock line to the respective one of said supply voltage inputs.


10.    The apparatus of Claim 9 , further including:

direct current power supply means for impressing a direct current potential level between said command bus line and said clock line.

FIG.1

FIG.2

FIG. 3

FIG.4

FIG. 5

FIG. 6